# EUROPÄISCHE PATENTSCHRIFT

(11) **EP 1 524 048 B1**
(45) Veröffentlichungstag und Bekanntmachung des Hinweises auf die Patenterteilung: **28.02.2007**
(21) Anmeldenummer: 03023320.9
(22) Anmeldetag: 15.10.2003
(51) Int. Cl.: B22D 17/14, B22D 17/20, B22D 27/11, B22D 17/32

(54) **Druck- oder Spritzgiessmaschine**
Diecasting or injection moulding machine
Appareil de moulage sous presssion ou par injection

(43) Veröffentlichungstag der Anmeldung: 20.04.2005
(73) Patentinhaber: Fondarex S.A., 1806 St. Légier (CH)
(72) Erfinder: Eisen, Peter, Dr., 8400 Winterthur (CH)
(74) Vertreter: Révy von Belvárd, Peter

(56) Entgegenhaltungen:
- EP-A- 0 600 324
- EP-A- 1 266 707
- US-A1- 2002 167 104

## Beschreibung

Die Erfindung bezieht sich auf eine Druck- oder Spritzgiessmaschine zur Formen eines Materiales, wie eines Metalles, in einem Formhohlraum, mit einem das im Formhohlraum nach dem Einschiessen schwindende Material nachverdichtenden in einem Nachverdichterzylinder mittels einer Antriebseinrichtung verschiebbaren Nachverdichterkolben, welcher Nachverdichterzylinder ein Anschlussende für einen Anschluss an die Form der Druck- oder Spritzgiessmaschine aufweist.

Derartige Maschinen sind in zahlreicher Ausführung bekannt geworden. Einen (externen) Nachverdichterkolben wird man insbesondere dann verwenden, wenn der Nachdruck eines Giesskolbens (oder eines anderen druckausübenden Organs, wie einer Extruderschnecke bei einer Spritzgiessmaschine) nicht mehr ausreicht, um alle in der Form stattfindenden Schwindungen auszugleichen. Dies wird also besonders bei kompliziert gebauten Formen bzw. komplizierten Gussstücken der Fall sein.

Gerade bei solchen komplizierten Formen, bei denen einzelne Abschnitte einen besonders grossen Strömungswiderstand bieten, andere dagegen nicht, ergibt sich aber auch noch ein anderes Problem: Solche Formen sind schwer in effizienter Weise zu evakuieren. Zwar wurde bereits vorgeschlagen, ein Vakuumventil vor und nach der Form vorzusehen, über welches eine Absaugung der in der Form enthaltenen Luft stattfinden kann. Diese Methode wirkt aber nicht bei allen Formen.

Es ist daher Aufgabe der Erfindung, eine Druck- oder Spritzgiessmaschine der eingangs genannten Art so auszubilden, dass die Luft auch aus sehr komplizierten Formen wirksam entfernt werden kann.

Erfindungsgemäss gelingt dies dadurch, dass der Nachverdichterzylinder in einem dem Anschlussende abgewandten Bereich mindestens eine Anschlussöffnung für eine Vakuumleitung aufweist, und dass der Nachverdichterkolben aus einer diese Anschlussöffnung freigebenden in eine die Anschlussöffnung abdeckende Position und von dieser aus in einem weiteren Schritt gegen das Anschlussende hin vorschiebbar ist.

Damit werden mehrere Vorteile auf einmal erzielt:
- zum einen lässt sich Luft auch aus jenem Bereich absaugen, wo der Nachverdichterkolben angreift, und dies wird im allgemeinen jener Bereich sein, wo die Form das grösste Materialvolumen ausbildet und somit auch die grösste Schwindung stattfindet;
- da aber an dieser Stelle das grösste Materialvolumen vorliegt, ist es logisch, dass in den benachbarten Bereichen weniger Material vorhanden ist, was engere Formhohlraumquerschnitte und damit einen höheren Widerstand gegen die Absaugung bedeutet;
- d.h. mit anderen Worten, dass daher erfindungsgemäss die Absaugung genau in jenem Bereich stattfindet, der wegen des erhöhten Strömungswiderstandes in den Nachbarbereichen bisher am wenigsten wirksam entlüftet werden konnte;
- zusätzlich ergibt sich eine Doppelverwendung einer bekannten Nachverdichtereinrichtung, die so als Ventil ausgestattet und benutzt wird.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine Seitenansicht einer erfindungsgemäss ausgebildeten Druckgiessmaschine;
- Fig. 2: ein Detail aus Fig. 1 mit einem Antrieb mit Positionssensor;
- Fig. 3: eine Alternative zu Fig. 2 mit einem Doppelkolben, wozu die
- Fig. 4: in Teilfiguren a), b) und c) verschiedene damit erzielbare Kolbenstellungen veranschaulicht; und
- Fig. 5: ein Schaubild für die Steuerung der Ausführung nach Fig. 2, an Hand derer aber auch die Steuerung der Ausführung nach Fig. 3 und 4 erläutert wird.

Eine Druckgiessmaschine 1 besitzt in üblicher Weise eine stationäre Formaufspannplatte 2, an der eine stationäre Formhälfte 3 befestigt wird. Diese stationäre Formhälfte 3 begrenzt zusammen mit einer beweglichen Formhälfte 4, die mit einer beweglichen Aufspannplatte 6 verbunden ist, einen Formhohlraum 7. Diesem Formhohlraum 7 kann gegebenenfalls eine externe Nachverdichtereinrichtung 8 zugeordnet sein (im Gegensatz zu einer in der Füllbüchse 9 verschiebbaren, internen Nachdruckeinrichtung, die entweder vom Giesskolben 11 selbst oder von einem in ihm verschiebbaren Acurad-Kolben, d.h. einem im Giesskolben gelagerten und darin vorschiebbaren Kolben, gebildet ist), die an sich bekannt und hier nur schematisch angedeutet ist. Auch im vorliegenden Fall ist ein Kolben 8" für die Nachverdichtung dargestellt, obwohl die Erfindung nicht auf einen von seiner Kolbenstange abgesetzten und gegenüber dieser verdickten Kolben beschränkt ist, sondern ein solcher Kolben samt Kolbenstange auch stiftförmig, also mit gleichmässigem Durchmesser ausgeführt sein kann.

Mit der stationären Formhälfte 3 ist eine Füllbüchse 9 mit einem Einfüllloch 10 verbunden, in der ein Giesskolben 11 über einen auf seine Kolbenstange 12 wirkenden hydraulischen Antrieb 13 verschiebbar ist, um das über das Einfüllloch 10 in die Füllbüchse 9 eingefüllte Metall in den Formhohlraum 7 zu drücken. Der hydraulische Antrieb 13 wird von einer Steuereinrichtung 14 gesteuert, die gegebenenfalls sowohl elektrisch-elektronische Bauteile als auch wenigstens einen Teil der Hydraulik beinhalten kann. Dazu ist sie in bekannter Weise mit einem Positions- und/oder Geschwindigkeits- und/oder Beschleunigungssensor 15 sowie weiteren Sensoren, wie Druckaufnehmern, über Leitungen 16 verbunden. Es versteht sich, dass im Falle einer Spritzgiessmaschine der Giesskolben 11 als druckausübendes Glied im allgemeinen durch eine Extruderschnecke ersetzt sein wird, obwohl auch Spritzgiessmaschinen mit Kolben bekannt geworden sind.

All diese Bauteile und ihre Zuordnungen sind an sich bekannter Natur und können im Rahmen der Erfindung beliebig abgewandelt werden. Ebenso bekannt ist es auch, im Bereiche der Trennebene der beiden Formhälften 3, 4 ein Vakuumventil 17 anzubringen. Dieses Vakuumventil 17 wird hier von einem im wesentlichen unmittelbar vor dem Anguss 21 sitzenden Metallfrontsensor 18 gesteuert, dessen Ansprechzeit, allenfalls durch entsprechende elektronische Massnahmen, wie insbesondere Verzögerungsschaltungen, gegebenenfalls aber auch (falls der Sensor sehr träge ist) durch eine Differenzierschaltung (zur Beschleunigung des Ansprechens), also in jedem Falle mittels einer eine Kapazität enthaltenden Schaltung, modifiziert und angepasst wird. Die Geschwindigkeit des Ansprechens dieses Sensors ist somit derart, dass das Ventil 17 noch in der Lage ist, eine Vakuumleitung 20 bzw. den Zutritt zu einer Vakuumquelle im Bereiche der Formhälften 3, 4 in demjenigen Zeitraum zu schliessen, der verstreicht, bis das Metall vom Sensor 18 zum Ventil 17 gelangt ist. Wie später noch im einzelnen erläutert wird, ist die Vakuumleitung 20 aber auch mit der Nachverdichtereinrichtung bzw. einem Nachverdichteraggregat 8 verbunden, die bzw. welches erfindungsgemäss gleichzeitig als Vakuumventil ausgebildet ist. Auch dieses Ventil 8 wird über den Sensor 18 und die Steuerung 14 unter Anpassung der Ansprechzeit gesteuert.

Die Tatsache, dass ein im wesentlichen unmittelbar vor dem Anguss 21 sitzender Metallfrontsensor 18 zur Steuerung der Vakuumventile 8, 17 verwendet wird, hat seinen besonderen Grund. Nach dem Stand der Technik wurden vom Giesskolben 11 abgeleitete Positionssignale zur Steuerung des jeweiligen Vakuumventils verwendet, so dass dieses trotz relativ grosser Trägheit der Steuerung rechtzeitig geschlossen wurde. Allerdings gab es dabei immer den den Schliesszeitpunkt des Vakuumventils beeinflussenden Faktor des Füllgrades der Füllbüchse 9. Denn mit hohem Füllgrad wurde natürlich der Formhohlraum 7 in kürzerer Zeit gefüllt als mit einem geringen Füllgrad. Daher war es lange Zeit ein besonderes Anliegen, den Füllgrad möglichst konstant zu halten, was nicht einfach zu erreichen ist. Eine, allerdings teure, Alternative wäre, einen Metallfrontsensor in unmittelbarer Nähe des zugehörigen Ventils 8 bzw. 17 anzubringen, der aber dann äusserst rasch reagieren müsste, was nur mit hohem Aufwand zu erzielen ist.

Die Anmelderin ist nun von der Überlegung ausgegangen, dass das Volumen des Formhohlraums bei gleicher Form ja stets konstant ist. Das bedeutet, dass sich der Füllgrad der Füllbüchse 9 nur bis zu dem Zeitpunkt des Erreichens des Angusses 21 auswirkt. Daher ist das Signal eines in diesem Bereich angeordneten Metallfrontsensors (gleich welcher Konstruktion) unabhängig vom Füllgrad der Füllbüchse 9 und kann - ohne einen teuren, rasch reagierenden Sensor zur Steuerung des jeweiligen Vakuumventiles 8 bzw. 20 benützen zu müssen - mit einem herkömmlichen, weniger rasch reagierenden Sensor 18 erzielt werden, ohne dass die Genauigkeit des Schliesszeitpunktes in Frage gestellt wird. Es versteht sich, dass die Verwendung des Signals eines im wesentlichen unmittelbar vor dem Anguss 21 sitzenden Metallfrontsensors 18 für die Steuerung mindestens eines Vakuumventiles unabhängig davon eine Erfindung darstellt, wie dieses Ventil ausgebildet ist bzw. ob nun dafür ein Nachverdichter 8 als Ventil ausgebildet wird oder nicht. Dazu kommt als weiterer Vorteil, dass ein solcher Metallfrontsensor 18 oft sowieso vorgesehen und über eine Leitung 19 mit der Steuerung 14 verbunden ist.

Wenn oben auch von einem konstanten Volumen des Formhohlraumes 7 ausgegangen wurde, so könnte dennoch die Füllzeit dann variieren, wenn die Geschwindigkeit des Giesskolbens 11 während der Füllphase etwa von der Temperatur der Form 3, 4 und/ der von der Metalltemperatur abhängig gemacht würde (bei kalter Form 3, 4 bzw. niedriger Metalltemperatur wird man gegebenenfalls den Formhohlraum 7 schneller füllen wollen als bei höheren Temperaturen). In einem solchen Falle könnten die von Temperatursensoren gelieferten Temperatursignale zweckmässig zur Korrektur von die Schliesszeit für die Ventile 8, 17 bestimmenden Stufen 23, 25 herangezogen werden, die später noch besprochen werden.

Vorteilhaft ist, wie oben bereits bemerkt, die Vakuumleitung 20 - statt eine gesonderte Steuereinrichtung mit Vakuumpumpe, Windkessel etc. zu besitzen - mit der auch die Giesskolbenbewegung steuernden Einrichtung 14 verbunden, wo diese Teile ebenfalls untergebracht sind, so dass ausser der Steuereinrichtung 14 keine gesonderten Teile vorgesehen werden müssen. Es ist übrigens ebenfalls bekannt, die Steuereinrichtung 14 am Maschinenrahmen einer Spritz- oder Druckgiessmaschine 1 zu befestigen, was auch hier möglich wäre.

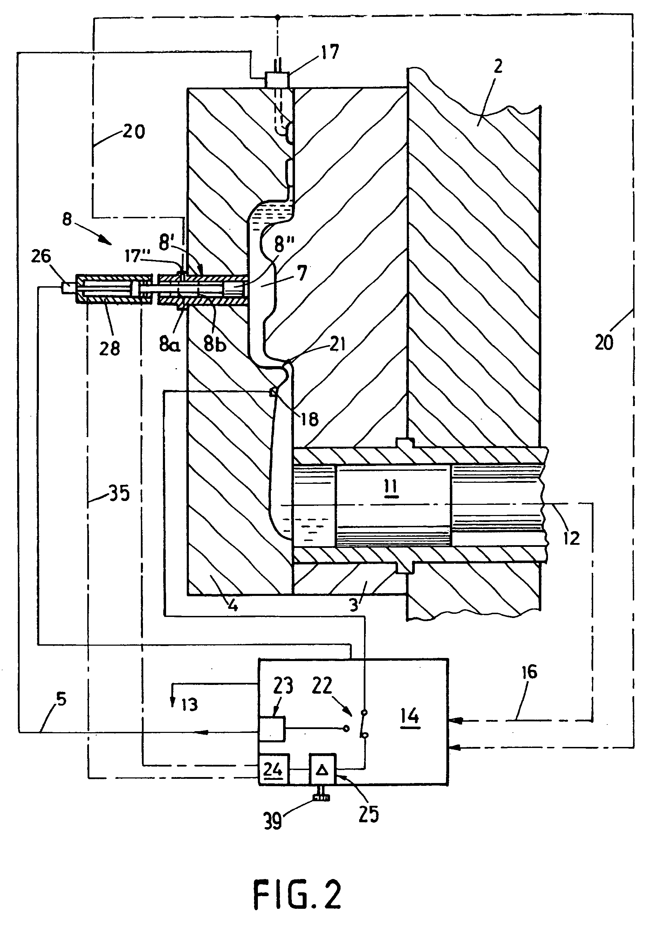

Gemäss Fig. 2, welche die Erfindung veranschaulicht, ist ein sogenannter externer Nachverdichterkolben 8" (im Gegensatz zu einem "internen" Nachdruck in der Füllbüchse durch den Giesskolben selbst oder durch einen innerhalb des Giesskolbens gelagerten und in ihm verschiebbaren Acurad-Kolben etwa nach der DE-A-14 58 061) in einem Zylinder 8' mit Hilfe eines, normalerweise hydraulischen, Antriebes 28 verschiebbar. Der Zylinder 8' mit dem Kolben 8" dient aber auch als Vakuumventil, indem der Zylinder 8' eine Vakuumanschlussöffnung 17" aufweist, die mit der Vakuumleitung 20 verbunden ist. Befindet sich der Kolben 8" in der strichliert angedeuteten Position 8a, so kommuniziert die Öffnung 17" mit dem Formhohlraum 7 und saugt diesen leer. Wird dagegen der Kolben 8" über die Öffnung 17" geschoben (oder in eine Stellung dahinter), so ist die Öffnung 17" gesperrt, und der Kolben 8" kann in der Folge wie ein normaler Nachverdichterkolben wirken, indem der Zylinder 8' zunächst etwas vom flüssigen Material bzw. Metall aufnimmt, welches in den Formhohlraum 7 eingeschossen wird, und es dann bei dessen Erkalten und Schwinden im Formhohlraum nachverdichtet.

Zu diesem Zweck kann der Antrieb 28 mit einem Positionssensor 26 versehen sein, der an sich beliebig in bekannter Weise ausgebildet sein mag, beispielsweise so, wie es in der US-A-3,956,973 beschrieben ist, bei der eine aus dem Antriebszylinder ragende Stange ein Gewinde aufweist, welches magnetisch abgetastet wird. Ein mit einem Positionssensor arbeitendes Nachverdichtersystem ist aus verschiedenen Dokumenten bekannt, beispielsweise aus der US-A-5,671,797, bei der dieser Sensor 26 auch Vorteile bei der Nachverdichtersteuerung bringt.

Auch der so ausgebildeten, einem doppelten Zweck als Nachdruckkolben und Vakuumventil dienenden Einrichtung 8 kann zwar ein gesonderter Metallfrontsensor zugeordnet sein. Bevorzugt ist allerdings, wenn er in seiner Funktion als Ventil vom selben Sensor 18 gesteuert wird, wie das Ventil 17. Der Grund wurde oben bereits genannt, nämlich die Tatsache, dass die Füllzeit der Form unabhängig vom Füllgrad der Füllbüchse 9 ist. Da aber der dem Nachdruck dienende Kolben 8" im allgemeinen eine grössere Masse haben wird als ein Ventilglied, etwa des Ventiles 17, reagiert er auch träger. Deshalb ist seinem Antrieb 28 und einer vorgeschalteten Hydrauliksteuerstufe 24 gegebenenfalls eine Differenzierstufe 25 vorgeordnet, die das Signal des relativ weit vor der Einrichtung 8 gelegenen Metallfrontsensors 18 erhält. Insofern stellt also diese Verwendung eines im Bereiche des Angusses 21 gelegenen und wenigstens eines der Ventile 8 bzw. 17 steuernden Sensors eine eigene, unabhängige Erfindung dar.

Der Antrieb 28 ist für die oben erörterten Zwecke besonders ausgebildet. Denn während er für den blossen Nachdruck den Kolben 8" nur im wesentlichen in einer einzigen Bewegung gegen das Metall bzw. den Formhohlraum 7 verschieben müsste, wird bei der Ausbildung als Kombination mit einer Ventilöffnung 17" die Bewegung im allgemeinen in zwei Stufen ablaufen: Denn sobald das Ausgangssignal des Sensors 18 den Antrieb 28 erreicht, verschiebt dieser den Kolben 8" in einer ersten Bewegungsstufe gerade so weit, dass er das Anschlussloch 17" für die Vakuumleitung 20 verschliesst. Damit ist das Vakuum an dieser Stelle unterbrochen bzw. das Eindringen von Metall in die Öffnung 17" wird verhindert. Diese Öffnung 17" wird daher an einer vom in den Formhohlraum 7 mündenden Anschlussende des Zylinders 8' entfernten Stelle, zweckmässig im Bereiche des gegenüberliegenden Endes, wie ersichtlich, angeordnet werden. Diese aus der Position 8a nach rechts vorgeschobene und die Öffnung 17" gegen das flüssige Metall abdeckende Lage 8b kann durch den Positionssensor 26 bestimmt werden, der die jeweilige Position des Antriebes 28 an die Steuerung 14 weitermeldet. Es versteht sich, dass hier zwar ein hydraulischer Antrieb 28 beschrieben ist, dass aber jeder andere gewünschte Antrieb verwendet werden könnte, wobei in jedem Fall die Verwendung eines Positionssensors 26 günstig ist.

Sobald aber die Nachdruckphase beginnen soll, verschiebt der Antrieb 28 den Kolben 8" weiter gegen das Anschlussende des Zylinders 8', womit dieser an den Formhohlraum 7 angeschlossen ist, wie dies herkömmlich der Fall ist. Dabei kann, wie bereits oben erläutert, das Ausgangsignal des Sensors 18 (das ja ebenfalls an die Steuerung 14 geleitet wird) dazu benutzt werden, um diese Nachdruckphase, insbesondere die des externen Nachverdichters 8, gegebenenfalls aber auch zusätzlich oder alternativ des Giesskolbens oder eines Acurad-Doppelkolbens mit entsprechender zeitlicher Verzögerung einzuleiten.

Es wurde bereits erwähnt, dass es vorteilhaft ist, einen einzigen Sensor 18 im Bereiche des Angusses 21 auch für das Schliessen des Ventiles 17 zu verwenden. Daher wird nach dem Schliessen der Ventilöffnung 17" über die Differenzierstufe 25 das Signal des Sensors 18 an eine Steuerleitung 5 geschaltet. Dies wird im allgemeinen innerhalb der Steuerung 14 durch eine entsprechende Programmierung erfolgen, doch ist im vorliegenden Fall ein Umschalter 22 dargestellt, dem zweckmässig eine Verzögerungsstufe 23 zur Anpassung der Schliesszeit des (über einen Elektromagneten betätigten) Ventiles 17 nachgeschaltet sein kann. Diese Stufe kann entfallen, wenn die Beschleunigung der Steuerung durch die Differenzierstufe 25 gerade demjenigen Zeitraum entspricht der sich bei Wegfall der Differenzierstufe 25 ergibt. Umgekehrt kann die Differenzierstufe 25 wegfallen, wenn der Sensor 18 rasch genug ist, dass er die Einrichtung 8 schnell genug betätigen kann. Natürlich können im Rahmen der Erfindung auch beide Ventile 8, 17, von eigenen Metallfrontsensoren gesteuert sein, doch ist ersichtlich, dass die Erfindung die Verwendung eines einzigen Sensors bzw. eines mindestens zwei Ventilen 8, 17 (es können auch noch mehr sein) Sensors 18 erlaubt. Es wäre auch denkbar, an der Stelle des Ventiles 17 zwei solcher Vakuumventile anzuordnen, um etwa bei einem komplizierten Gussteil Luft von verschiedenen Seiten (z.B. von der linken und der rechten Seite der hier von der Seite gezeigten Form 3, 4) abzusaugen. In diesem Falle erübrigt sich natürlich eine Anpassung der Schliesszeit der Ventile, weil sie ja etwa gleichzeitig schliessen werden.

Falls mindestens eine dieser Zeitanpassstufen 23 und/oder 25 vorgesehen werden, ist es vorteilhaft, diese Zeitanpassung mit dem Wechsel der Formhälften 3, 4 entsprechend dem veränderten Formvolumen (bei Produktion eines anderen Gussteiles) verändern zu können. In Fig. 2 ist die Stufe 25 mit einem Justierknopf 39 versehen, durch den etwa eine Toleranzschwelle für durch Differenzierung ermittelte Veränderungen verändert werden kann. Eine analoge (hier nicht dargestellte) Justiereinrichtung kann für die Verzögerungsstufe 23 vorgesehen werden, bei welcher (im Fallle einer analogen Verzögerungsstufe 23) beispielsweise der Kapazitätswert einer Kondensatorschaltung oder (im Falle einer digitalen Ausbildung der Verzögerungsstufe 23 mit einem die Takte eines Taktgenerators zur Verzögerung abzählenden Zähler) die vom Zähler abzuzählende Zahl bis zur Abgabe eines Ausgangssignales verändert wird. Die Justiereinrichtung könnte (mindestens theoretisch) auch automatisch mit dem Formwechsel eingegeben werden, indem an einer Formhälfte, beispielsweise der stationären Form 3, ein das Füllvolumen anzeigender Code, beispielsweise in ähnlicher Weise angebracht ist, wie dies bei der automatischen Eingabe der Filmempfindlichkeit in Kameras durch einen an der Filmkassette angebrachten und ablesbaren Code bekannt ist. Auch die Beeinflussung durch die Geschwindigkeitseinstellungen in der Steuerung 14 für den Giesskolben 11 kann besonders dann leicht erfolgen, wenn - wie dargestellt - eine einheitliche Steuerung für die Vakuumventile 8, 17 und den Giesskolben 11 vorgesehen ist. Insofern stellt also auch die gemeinsame Steuerung 14 eine Zeitanpassstufe dar.

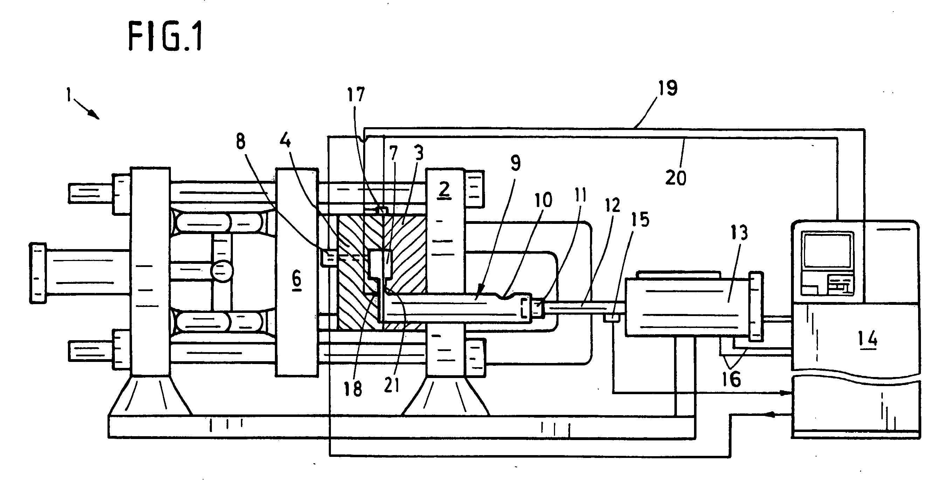

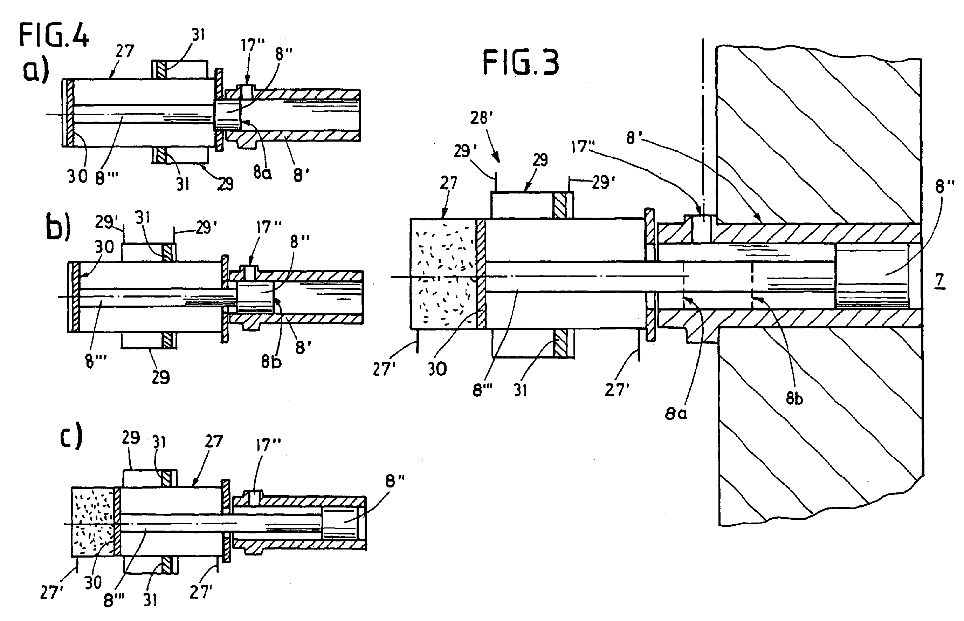

Um eine zweistufige Bewegung des Kolbens 8" auszuführen, sind aber verschiedene Ausgestaltungen des Antriebes auch ohne einen Positionssensor 26 möglich. Eine solche Möglichkeit ist in Fig. 3 dargestellt. Dabei ist der Antrieb 28' als 2-stufiges Zylinderaggregat ausgebildet und besitzt zwei konzentrische Zylinder 27, 29 mit einem äusseren, mit dem inneren Zylinder 27 fest verbundenen Ringkolben 31 in einem äusseren Zylinder 29 und einem inneren, mit der Kolbenstange 8'" für den Nachverdichterkolben 8" verbundenen Antriebskolben 30 in einem inneren Zylinder 27. Jedem Zylinder 27 bzw. 29 sind Zuund Ableitungen 27' bzw. 29' für ein Fluid, vorzugsweise ein hydraulisches Fluid, zugeordnet, die in nicht dargestellter Weise mit der zentralen Steuerung 14 (Fig. 1) verbunden sind und von dieser gesteuert werden, wie unten an Hand der Fig. 6 noch erläutert wird.

Dabei wird davon ausgegangen, dass jeder der Kolben 30, 31 einen unveränderlichen Hub besitzt, der jeweils so bemessen ist, dass die Positionen 8a und 8b bzw. die mit vollen Linien dargestellte Endposition durch Ausnützung jeweils des vollen Hubes erreicht werden können. Welcher der Kolben 30 oder 31 dabei den ersten Bewegungsschritt in der Bewegungsabfolge des Nachverdichterkolbens 8" durchführt ist nicht wesentlich. Im vorliegenden Ausführungsbeispiel wird die bevorzugte Ausführung gezeigt, bei welcher der äussere Ringkolben 31 für diesen ersten Bewegungsschritt aus der Stellung nach Fig. 4 a) in die Position nach Fig. 4 b) verantwortlich ist. Jedenfalls aber kommt eine solche Ausführung ohne Sensoren aus und wird im allgemeinen auch eine sehr genaue Positionierung ermöglichen.

Fig. 4 veranschaulicht die verschiedenen Positionen des Antriebes 28'. Dabei befindet sich der Nachverdichterkolben 8" in Fig. 4 a) in der Ausgangslage, in welcher die Vakuumanschlussöffnung 17" über das freie, mit dem Formhohlraum 7 verbundene Ende des Nachverdichterzylinders 8' mit diesem Formhohlraum 7 kommuniziert und Luft heraussaugt. Beide Antriebskolben 30 und 31 befinden sich in ihrem jeweiligen Zylinder 27 und 29 in der linken Endstellung.

Sobald der der Einrichtung 8 zugeordnete Metallfrontsensor 18 (Fig. 1) die Ankunft des Metalles (oder im Falle einer Spritzgiessmaschine des Kunststoffes) an die Steuerung 14 meldet, bewirkt diese über die aus Fig. 3 ersichtlichen Leitungsanschlüsse 29', dass sich der äussere Ringkolben 31 aus der Stellung nach Fig. 4 a) nach rechts, d.h. in diejenige der Fig. 4 b), bewegt. Dabei ist die Länge des Zylinders 29 bzw. der Hub des Ringkolbens 31 darin gerade so bemessen, dass sich der Nachverdichterkolben 8" aus der Stellung nach Fig. 4 a), in welcher er die Vakuumöffnung 17" freigibt, in eine diese Öffnung 17" verschliessende Stellung bewegt. Damit ist gesichert, dass das in den Formhohlraum 7 einströmende Material nicht unversehens in die Öffnung 17" gelangen kann. Das Metall wird aber in das Innere des Nachverdichterzylinders 8' gelangen, wo es eine Materialreserve zum Ausgleich der bei der Abkühlung des Metalles entstehenden Schwindung bildet.

Wenn nun das Metall bei fortgesetzter Füllung des Formhohlraumes 7 diesen völlig ausfüllt und somit an das in diesem Augenblick ebenfalls schliessende Vakuumventil 17 (Fig. 1) gekommen ist (was vorzugsweise ebenfalls über den Sensor 18 gesteuert wird, wie oben besprochen wurde), beginnt die Abkühlung des Materiales durch die bekannte Kühlung der Formhälften 3, 4. In diesem Augenblick aber ist es vorteilhaft, den entstehenden Materialschwund durch den Nachverdichterkolben 8" auszugleichen, der das in dem Nachverdichterzylinder 8' enthaltene Material in das Innere des Formhohlraumes 7 schiebt. Dabei wird der Nachverdichterkolben 8" im allgemeinen an einer Stelle platziert werden, wo der Formhohlraum 7 einen grossen Raum bildet, in dem sich dann viel Metall befindet, das damit auch einer grösseren Schwindung unterworfen ist, wogegen Nachbarstellen einen dünneren Querschnitt besitzen, so dass etwa der Nachdruck durch den Giesskolben 11 (Fig. 1) wenig Wirkung hat. Die Ausbildung der Nachverdichtereinrichtung 8 als Vakuumventil hat auch in einem solchen Fall den grössten Vorteil, denn über die benachbarte verengte Stelle des Formhohlraumes lässt sich ja auch über das Ventil 17 (Fig. 1) wegen des dadurch gegebenen höheren Luftwiderstandes nur schlecht die Luft aus der der Einrichtung 8 gegenüberliegenden Stelle des Formhohlraumes 7 heraussaugen.

Um also den Nachverdichterkolben 8" in der geschilderten Weise aus der Stellung nach Fig. 4 b) gegen das freie, mit dem Formhohlraum 7 verbundene Ende des Nachverdichterzylinders 8' vorzuschieben, wird über den in dieser Figur linken Zulauf 27' Fluid in den inneren Antriebszylinder 27 gebracht, wobei der Nachverdichterkolben in die in Fig. 4 c) gezeigte Stellung gegen den Formhohlraum 7 hin vorgeschoben wird, wie dies auch die Fig. 3 zeigt. Es ist ersichtlich, dass dabei nicht der volle, durch die Länge des Zylinders 27 ermöglichte Hub des inneren Kolbens 30 ausgenützt wird, d.h. dieser kann gegebenenfalls kürzer ausgeführt werden. Dabei kann der innere Zylinder 27 analog zu dem der Einrichtung 28 nach Fig. 1, d.h. mit einem Positionssensor 26 und/oder einem Drucksensor (zur Begrenzung des Nachverdichtungsdruckes) ausgestattet werden, wobei auch hier die Steuerung des Nachverdichtervorganges in an sich bekannter Weise erfolgen kann.

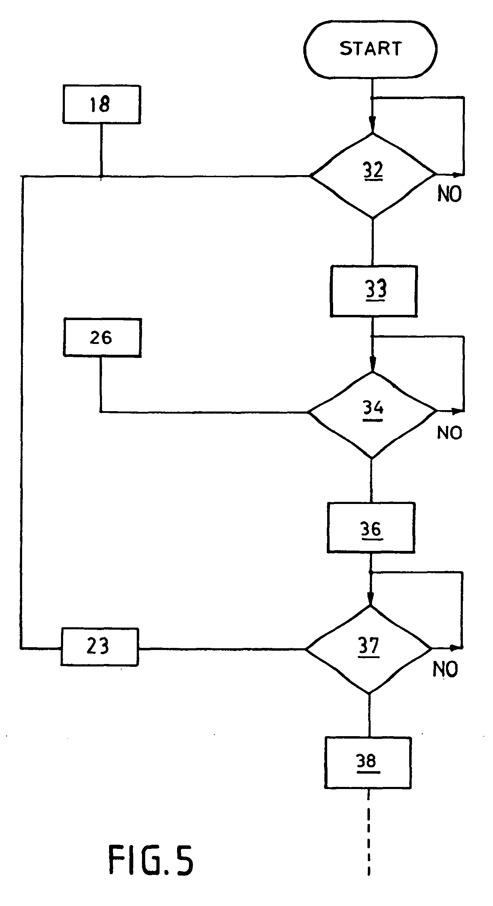

Im Falle einer Antriebseinrichtung 28 nach Fig. 2 geschieht die Steuerung in der nun an Hand der Fig. 5 beschriebenen Weise. Wird der Schuss ausgelöst, d.h. der Giesskolben 11 aus seiner in Fig. 1 gezeigten Anfangslage in Bewegung versetzt, so erfolgt somit der START. Anschliessend bewegt sich der Giesskolben 11 zunächst bis er das Einfülloch 10 abgedeckt hat und setzt dann seine Bewegung solange fort, bis das Metall in den Bereich des Angusses 21 (Fig. 2) und damit des Metallfrontsensors 18 gelangt ist. Bis zu diesem Zeitpunkt wird über eine Frageraute 32 laufend überprüft, ob das Signal des Metallfrontsensors 18 bereits abgegeben wurde oder nicht, wobei im Falle der Antwort "NO" die Abfrage wiederholt wird.

Sobald aber das Ausgangssignal des Metallfrontsensors 18 (allenfalls über die Zeitanpassstufe 25 der Fig. 1) eingetroffen ist, erfolgt Schritt 33, in welchem die Antriebseinrichtung 28 über eine Leitung 35 (Fig. 2) Fluid erhält und den Nachverdichterkolben aus der Anfangsstellung 8a gegen die Stellung 8b vorschiebt. Nun wird an Hand des Ausgangssignals des Positionssensors 26 überprüft (Frageraute 34), ob die Stellung 8b bereits erreicht ist. Wenn nicht, so wird die Frage über den "NO"-Ausgang wiederholt. Ist aber die Position 8b erreicht, so erhält man das entsprechende Signal des Positionssensors 26, und es kann der nächste Schritt 36 eingeleitet werden. Im Schritt 36 wird der Zustrom von Fluid über die Leitung 35 von der Steuerung 14 unterbrochen und somit der Nachverdichterkolben 8" in dieser Stellung angehalten, in welcher er - wie schon gesagt - die Vakuumöffnung 17" verschliesst und gegen das Eindringen von Metall schützt.

In der anschliessenden Frageraute 37 wird dann überprüft, ob das Signal des Metallfrontsensors 18 über die Verzögerungsstufe 23 bereits eingegangen ist, was das Schliessen des Ventiles 17 (Fig. 1) bedeutet. Natürlich entfällt die Verzögerungsstufe 23, falls dem Ventil 17 ein gesonderter Sensor zugeordnet wird oder es auf andere, herkömmliche Weise gesteuert wird. Solange dieses Signal von der Verzögerungsstufe 23 noch nicht erhalten wurde, wird die Abfrage über den Ausgang "NO" immer wieder fortgesetzt. Ist aber einmal das Signal eingegangen, so erfolgt der Schritt 38, bei dem der Nachverdichterkolben 8" aus der Position 8b gegen den Formhohlraum 7 und das freie Ende des Nachverdichterzylinders 8' vorgeschoben wird, um die Nachverdichtung durchzuführen. Die darauf allenfalls noch erfolgenden Schritte sind dann herkömmlicher Natur und entsprechen beispielsweise der schon genannten US-A-5,671,797.

Die Steuerung der Ausführung nach den Fig. 3 und 4 ist ähnlich. Auch hier wird nach dem Start das Eintreffen der Materialfront (Metall bei einer Druckgiessmaschine, Kunststoff bei einer Spritzgiessmaschine) das Eintreffen der Materialfront am Sensor 18 überprüft und abgewartet. Dann aber, im Schritt 33 wird lediglich der Befehl gegeben, über die linke Zuleitung 29' (bezogen auf Fig. 4) dem Antriebszylinder 29 Fluid zuzuführen, um den Ringkolben 31 aus der Stellung nach Fig. 4 a) in die Position nach Fig. 4 b) zu bringen, d.h. den Nachverdichterkolben 8" in die Stellung 8b zu bewegen, in der er die Ventilöffnung 17" abdeckt. Eine Überprüfung dieser Lage 8b durch einen Positionssensor 26 ist nicht erforderlich, weil der Hub ja durch die Länge des Ringzylinders 29 (oder durch darin angebrachte, gegebenenfalls einstellbare, Anschläge) bestimmt wird; das bedeutet, dass die nächsten Schritte 34 und 36 bei einer Antriebsausführung nach den Fig. 3 und 4 ausfallen.

Anschliessend wird wieder der Zeitpunkt des Schliessens des Ventiles 17 (Fig. 1, 2) abgewartet, wobei ein diesem Ventil 17 gesonderter Materialfrontsensor oder, bevorzugt, der Sensor 18 über die Verzögerungsstufe 23 (deren Zeitkonstante allenfalls justierbar sein kann) die Vollendung der Füllphase im Formhohlraum 7 meldet. Dann erfolgt der Schritt 38 in der Weise, dass Fluid über die linke Zuleitung 27' (bezogen auf Fig. 4) dem inneren Antriebszylinder 27 zugeführt wird, wobei - wie schon erwähnt - die Nachverdichtungssteuerung in bekannter Weise erfolgen kann.

Nach einem vollständigen Giesszyklus wird natürlich - ausgehend von der Situation nach Fig. 4 c) - die Ausgangslage nach Fig. 4 a) wieder hergestellt. Die Auslösung kann beispielsweise nach einer vorbestimmten Nachverdichtungszeit oder mit dem Befehl zum Öffnen der Formhälften 3, 4 erfolgen. In diesem Falle wird auf Befehl der Steuerung 14 Fluid über die in Fig. 4 rechten Leitungen 27' und 29' zu- und über die linken Leitungen 27', 29' abgeleitet, bis die Ausgangslage wieder erreicht ist.

Im Rahmen der Erfindung sind zahlreiche Modifikationen möglich; wie erwähnt, können beispielsweise die Rollen der Antriebszylinder 27 und 29 miteinander vertauscht werden, obwohl dies im allgemeinen nicht erwünscht sein wird. Es ist auch klar, dass die geschilderten Antriebe für den Nachverdichterkolben ebenso am Markt gesondert handelbare Güter darstellen, wie das Nachverdichteraggregat mit oder ohne Antrieb, oder auch die Steuerungsanordnung für den Materialfrontsensor 18. Ferner ist aus den obigen Erläuterungen ersichtlich, dass in dieser Beschreibung für Teile gleicher Funktion dieselben Bezugszeichen eingesetzt wurden, für Teile ähnlicher Funktion aber mit einem Zusatzzeichen.

Es sei erwähnt, dass die Anschlussöffnung 17" im allgemeinen als kreisrunde Bohrung ausgeführt sein wird, dass es aber zur Erzielung einer besonderen, allenfalls gewünschten, Abschaltcharakteristik durchaus möglich ist, dieser Öffnung eine besondere Form zu geben. Beispielsweise könnte die Öffnung 17" dreieckförmig sein, wobei sich das Dreieck beispielsweise in Verschieberichtung des Nachverdichterkolbens 8" erstreckt, um entweder (bei mit der Spitze gegen den Formhohlraum weisendem Dreieck) ein sanftes Abschliessen der Vakuumwirkung, oder - bei umgekehrter Lage des Dreiecks - ein plötzliches Abschliessen dieser Wirkung nach möglichst langem vollem Saugdruck zu erzielen. Auch andere Formen dieser Öffnung oder auch eine Mehrzahl von ihnen wäre denkbar, wird aber für gewöhnlich aber nicht erforderlich sein.

### BEZUGSZEICHENLISTE

| | | | |
|---|---|---|---|
| 1 | Druckgiessmaschine | 2 | Formaufspannplatte |
| 3 | stationäre Formhälfte | 4 | bewegliche Formhälfte |
| 5 | Steuerleitung | 6 | bewegliche Aufspannplatte |
| 7 | Formhohlraum | 8 | Nachverdichtereinrichtung |
| 8' | Zylinder v. 8 | 8" | Nachverdichterkolben |
| 9 | Füllbüchse | 10 | Einfülloch |
| 11 | Giesskolben | 12 | Kolbenstange |
| 13 | hydraulischer Antrieb | 14 | Steuereinrichtung |
| 15 | Sensor | 16 | Leitungen |
| 17 | Vakuumventil | 17" | Vakuumöffnung v. 8' |
| | | 18 | Metallfrontsensor |
| 19 | Ausgangsleitung von 18 | 20 | Vakuumleitung |
| 21 | Anguss | 22 | Umschalter |
| 23 | Verzögerungsstufe | 24 | Hydrauliksteuerstufe |
| 25 | Differenzierstufe | 26 | Positionssensor |
| 27 | innerer Zylinder | 28 | Antrieb f. 8 |
| 29 | äusserer Zylinder | 30 | innerer Kolben |
| 31 | äusserer Ringkolben | 32 | Frageraute |
| 33 | Schritt (Vorschieben nach 8b) | 34 | Frageraute |
| 35 | Leitung v. 28 | 36 | Schritt (Stopp des Vorschubs) |
| 37 | Frageraute | 38 | Schritt (Nachverdichten) |
| 39 | Justiereinrichtung | | |

## Patentansprüche

1. Druck- oder Spritzgiessmaschine (1) zur Formen eines Materiales, wie eines Metalles, in einem Formhohlraum (7) einer Form (3, 4) mit einem das im Formhohlraum (7) nach dem Einschiessen schwindende Material nachverdichtenden, in einem Nachverdichterzylinder (8') mittels eines Antriebes (28; 28') gegen die freie Öffnung des Nachverdichterzylinders (8') verschiebbaren verschiebbaren Nachverdichterkolben (8"), welcher Nachverdichterzylinder (8') ein Anschlussende für einen Anschluss an die Form (3, 4) der Druck- oder Spritzgiessmaschine (1) aufweist, **dadurch gekennzeichnet, dass** der Nachverdichterzylinder (8') in einem dem Anschlussende abgewandten Bereich mindestens eine Anschlussöffnung (17") für eine Vakuumquelle (14, 20) aufweist, und dass der Nachverdichterkolben (8") mit Hilfe seiner Antriebseinrichtung (28; 28') aus einer diese Anschlussöffnung (17") freigebenden in eine die Anschlussöffnung (17") abdeckende Position und von dieser aus in einem weiteren Schritt (38) gegen das Anschlussende bzw. den Formhohlraum (7) hin vorschiebbar ist.

2. Druck- oder Spritzgiessmaschine (1) nach Anspruch 1, **dadurch gekennzeichnet, dass** dem Antrieb (28; 28') für den Nachverdichterkolben (8") ein Positionssensor (26) zugeordnet ist, der ein von der Stellung des Antriebes (28; 28') abhängiges Signal liefert, und dass in einer Steuerung (14) diesem Signal eine erste, die Anschlussöffnung (17") freigebende Sollposition, sowie mindestens eine zweite, die Anschlussöffnung (17") abdeckende Sollposition zugeordnet ist.

3. Druck- oder Spritzgiessmaschine (1) nach Anspruch 1, **dadurch gekennzeichnet, dass** der Antrieb (28; 28') für den Nachverdichterkolben (8") zwei konzentrische Zylinder (27, 29) mit einem äusseren Ringkolben (31) in einem äusseren Ringzylinder (29) und einem inneren Kolben (30) in einem inneren Zylinder (27) aufweist, und dass in einer Steuerung (14) zuerst der eine Kolben (30 bzw. 31) zur Erreichung einer die Anschlussöffnung (17") abdeckenden Position des Nachverdichterkolbens (8") betätigbar ist, und hierauf der ahdere Kolben (31 bzw. 30) zum Vorschieben des Nachverdichterkolbens (8") gegen den Formhohlraum (7) hin zur Ausübung der Nachverdichtung.

4. Druck- oder Spritzgiessmaschine (1) nach Anspruch 3, **dadurch gekennzeichnet, dass** Steuerung (14) des Nachverdichterkolbens (8") in die die Anschlussöffnung (17") abdeckende Position durch den äusseren Ringzylinder (29) erfolgt, die Ausübung der Nachverdichtung hingegen durch den inneren Zylinder (27).

5. Druck- oder Spritzgiessmaschine (1) nach Anspruch 1, **dadurch gekennzeichnet, dass** der Nachverdichterzylinder (8') im Bereiche des von seinem freien Ende abgewandten Endes eine Anschlussöffnung (17") für eine Vakuumquelle (14, 20) aufweist.

6. Druck- oder Spritzgiessmaschine (1) nach Anspruch 5, **dadurch gekennzeichnet, dass** an dem Nachverdichterzylinder (8') die Antriebseinrichtung (28) angebracht ist, und dass diese einen Positionssensor (26) aufweist, der ein von der Stellung des Antriebes (28) abhängiges Signal liefert.

7. Druck- oder Spritzgiessmaschine (1) nach Anspruch 5, **dadurch gekennzeichnet, dass** an dem Nachverdichterzylinder (8') die Antriebseinrichtung (28) angebracht ist, und dass diese zwei konzentrische Zylinder (27, 29) mit einem äusseren Ringkolben (31) in einem äusseren Ringzylinder (29) und einem inneren Kolben (30) in einem inneren Zylinder (27) aufweist, so dass der Nachverdichterkolben (8") durch Betätigen des einen Kolbens (30 bzw. 31) in eine die Anschlussöffnung (17") abdeckende Position und durch Betätigen des anderen Kolbens (31 bzw. 30) gegen den Formhohlraum (7) hin zur Ausübung der Nachverdichtung bewegbar ist.

8. Druck- oder Spritzgiessmaschine (1) nach Anspruch 1, **dadurch gekennzeichnet, dass der** Nachverdichterzylinder mit der Anschlussöffnung (17") für eine Vakuumquelle (14, 20) als Vakuumventil (8) an der Form (3, 4) vorgesehen ist, und ein Materialfrontsensors (18) vorhanden ist, dessen Ausgangssignal die Schliessbewegung des Vakuumventils (8, 17) auslöst, und dass der Materialfrontsensor (18) im Bereiche eines Angusses (21), vor dem Formhohlraum (7) angeordnet ist.

9. Druck- oder Spritzgiessmaschine (1) nach Anspruch 1, **dadurch gekennzeichnet, dass das** Ausgangssignal des Materialfrontsensors (18) mindestens zwei Vakuumventilen (8, 17) zuführbar ist, und dass vorzugsweise mindestens einem der Vakuumventile (8 bzw. 17) eine Zeitanpassstufe (14, 23, 25) zur Anpassung der Schliesszeit gegenüber der Schliesszeit des anderen Vakuumventiles (17 bzw. 8) zugeordnet ist.

10. Druck- oder Spritzgiessmaschine (1) nach Anspruch 9, **dadurch gekennzeichnet, dass** mindestens einer Zeitanpassstufe (14, 23, 25) eine Justiereinrichtung (39) zugeordnet ist, durch die die Zeitanpassung entsprechend der verwendeten Form (3, 4) und/oder der jeweiligen Geschwindigkeit des Giesskolbens (11) nachstellbar ist.

## Claims

1. Die casting or injection moulding machine (1) for shaping material, such as a metal, within a cavity (7) of a mould or die (3, 4), comprising an after-pressure piston (8") for redensifying the material within said cavity (7), which shrinks after the shot, said piston being displaceable within an after-pressure cylinder (8') by drive means (28; 28') towards a free opening of said after-pressure cylinder (8'), the after-pressure cylinder (8') having a connection end for connecting it to the mould or die (3, 4) of said die casting or injection moulding machine (1), **characterised in that** said after-pressure cylinder (8'), in a region averted from said connection end, comprises at least one connection opening (17") for a vacuum source (14, 20), and that the after-pressure piston (8") may be advanced by its drive means (28, 28') from a position which gives said connection opening (17") free into one which covers said connection opening (17"), and from there in a further step (38) towards said connection end and the cavity (7).

2. Die casting or injection moulding machine (1) according to claim 1, **characterised in that** a position sensor (26) is associated to said drive means (28; 28') for said after-pressure piston (8"), and supplies a signal dependent upon the position of said drive means (28; 28'), and that in control means (14) a first nominal position, which gives said connection opening (17") free, is associated to this signal as well as at least a second one covering said connection opening (17").

3. Die casting or injection moulding machine (1) according to claim 1, **characterised in that** said drive means (28; 28') for said after-pressure piston (8") comprises two concentric cylinders (27, 29) including an outer annular piston (31) in an outer annular cylinder (29) and an inner piston (30) in an inner cylinder (27), and that by control means (14) first one piston (30 or 31) may be actuated for reaching a position of the after-pressure piston (8"), in which it covers said connection opening (17"), and afterwards the other piston (31 or 30) for advancing said after-pressure piston (8") towards said cavity (7) for exerting redensification.

4. Die casting or injection moulding machine (1) according to claim 3, **characterised in that** control (14) of said after-pressure piston (8") into that position in which said connection opening (17") is covered, is effected by said outer annular cylinder (29), while the exertion of redensification is effected by said inner cylinder (27).

5. Die casting or injection moulding machine (1) according to claim 1, **characterised in that** the after-pressure cylinder (8'), in a region averted from said connection end, comprises a connection opening (17") for a vacuum source (14, 20).

6. Die casting or injection moulding machine (1) according to claim 5, **characterised in that** said drive means (28) are attached to said after-pressure piston (8"), and that it comprises a position sensor (26) which supplies a signal dependent upon the position of said drive means (28).

7. Die casting or injection moulding machine (1) according to claim 5, **characterised in that** said drive means (28) are attached to said after-pressure piston (8'), and that it comprises two concentric cylinders (27, 29) including an outer annular piston (31) in an outer annular cylinder (29) and an inner piston (30) in an inner cylinder (27) so that said after-pressure piston (8") may be displaced by actuation of one of the pistons (30 or 31) into a position in which it covers said connection opening (17"), and by actuation of the other piston (31 or 30) towards the cavity (7) for exerting a redensification.

8. Die casting or injection moulding machine (1) according to claim 1, **characterised in that** said after-pressure cylinder is provided at the die or mould with said connecting opening (17") for a vacuum source (14, 20) as a vacuum valve (8), and that a material front senor (18) is provided whose output signal releases the closure movement of said vacuum valve (8, 17), and that said material front sensor (18) is located in the region of a gating (21) before the cavity (7).

9. Die casting or injection moulding machine (1) according to claim 1, **characterised in that** the output signal of the material front senor (18) may be supplied to at least two vacuum valves (8, 17), and that preferably a time adapting stage (14, 23, 25) is associated to at least one of the vacuum valves (8 or 17) for adapting the closure time with respect to the closure time of the other vacuum valve (17 or 18).

10. Die casting or injection moulding machine (1) according to claim 9, **characterised in that** adjusting means (39) are associated to at least one time adapting stage (14, 23, 25), by which the time adaptation may be adjusted in accordance with the die or mould used (3, 4) and/or with the respective speed of the casting plunger (11).

## Revendications

1. Appareil de moulage sous pression ou par injection (1) pour former un matériau, comme un métal, dans une cavité (7) d'un moule (3, 4), comprenant un piston de recompression (8"), qui recomprime le matériau se contractant dans la cavité (7) après l'injection, et qui est déplaçable dans un cylindre de recompression (8') au moyens d'un entraînement (28, 28') vers l'ouverture libre du cylindre de recompression (8'), ledit cylindre de recompression (8') présentant un bout de connexion pour le rattacher au moule (3, 4) de l'appareil de moulage sous pression ou par injection (1), **caractérisé en ce, que** le cylindre de recompression (8'), dans une zone détournée du bout de connexion, comprend au moins une ouverture de connexion (17") pour une source de vacuum (14, 20), et que le piston de recompression (8") peut être avancé au moyens d'un dispositif d'entraînement (28; 28') d'une position de déblocage de cette ouverture de connexion (17") à une position couvrant l'ouverture de connexion (17"), et à partir de celle-ci, par un pas ultérieur (38), vers le bout de connexion et la cavité (7).

2. Appareil de moulage sous pression ou par injection (1) selon la revendication 1, **caractérisé en ce, qu'**un capteur de position (26) est associé à l'entraînement (28; 28') du piston de recompression (8"), qui délivre un signal, qui dépend de la position de l'entraînement (28; 28'), et que, dans une unité de commande (14), une position nominale débloquant l'ouverture de connexion (17") ainsi qu'au moins une deuxième position nominale couvrant l'ouverture de connexion (17") sont associées à ce signal.

3. Appareil de moulage sous pression ou par injection (1) selon la revendication 1, **caractérisé en ce, que** l'entraînement (28; 28') du piston de recompression (8") comprend deux cylindres concentriques (27, 29) incluant un piston annulaire externe (29) et un piston interne (30) dans un cylindre interne (27), et qu'une unité de commande (14) est formée de forme, que d'abord l'un des pistons (30 ou 31) peut être actionné jusqu'à ce qu'il atteigne une position du piston de recompression (8"), qui couvre l'ouverture de connexion (17"), et puis l'autre piston (31 ou 30) pour avancer le piston de recompression (8") vers la cavité (7) pour exercer la recompression.

4. Appareil de moulage sous pression ou par injection (1) selon la revendication 3, **caractérisé en ce, que** la commande (14) du piston de recompression (8") à la position, qui couvre l'ouverture de connexion (17"), est effectuée par le piston annulaire externe (29), tandis que l'exercice de la recompression est effectué par le cylindre interne (27).

5. Appareil de moulage sous pression ou par injection (1) selon la revendication 1, **caractérisé en ce, que** le cylindre de recompression (8'), dans une zone détournée du bout de connexion, comprend au moins une ouverture de connexion (17") pour une source de vacuum (14, 20).

6. Appareil de moulage sous pression ou par injection (1) selon la revendication 5, **caractérisé en ce, que** le dispositif d'entraînement (28) est rattaché au cylindre de recompression (8'), et qu'il comprend un capteur de position (26), qui délivre un signal, qui dépend de la position de l'entraînement (28; 28').

7. Appareil de moulage sous pression ou par injection (1) selon la revendication 5, **caractérisé en ce, que** le dispositif d'entraînement (28) est rattaché au cylindre de recompression (8'), et qu'il comprend deux cylindres concentriques (27, 29) incluant un piston annulaire externe (29) et un piston interne (30) dans un cylindre interne (27), de façon que le piston de recompression (8"), par actionnement d'un des pistons (30 ou 31) peut être déplacé à une position, qui couvre l'ouverture de connexion (17"), et par actionnement de l'autre piston (31 ou 30) peut être déplacé vers la cavité (7) pour exercer la recompression.

8. Appareil de moulage sous pression ou par injection (1) selon la revendication 1, **caractérisé en ce, que** le cylindre de recompression avec l'ouverture de connexion (17") pour une source de vacuum (14, 20), comme soupape de vacuum, est prévu au moule (3, 4), et qu'un capteur de l'avance du matériau (18) est prévu, dont le signal de sortie déclenche le mouvement de fermeture du soupape de vacuum (8, 17), et que le capteur de l'avance du matériau (18) est situé dans la zone d'une entrée (21) avant la cavité (7).

9. Appareil de moulage sous pression ou par injection (1) selon la revendication 1, **caractérisé en ce, que** le signal de sortie du capteur de l'avance du matériau (18) peut être délivré à au moins deux soupapes de vacuum (8, 17), et que de préférence un étage d'adaptation de temps (14, 23, 25) est associé à au moins un des soupapes de vacuum (8 ou 17) pour adapter son temps de fermeture par rapport au temps de fermeture de l'autre soupape de vacuum (17 ou 8).

10. Appareil de moulage sous pression ou par injection (1) selon la revendication 9, **caractérisé en ce, qu'**un dispositif d'ajustage (39) est associé à au moins un étage d'adaptation de temps (14, 23, 25), par lequel l'adaptation de temps peut être ajustée en correspondance au moule utilisé et/ou à la vitesse respective du piston d'injection (11).
